Europäisches Patentamt

European Patent Office

Office européen des brevets

(11) Publication number: **0 377 640 B1**

# EUROPEAN PATENT SPECIFICATION

(45) Date of publication of patent specification: **13.10.93**   (51) Int. Cl.⁵: **C22C 21/12**, C22C 21/06, C22C 21/00

(21) Application number: **88908055.2**

(22) Date of filing: **21.07.88**

(86) International application number:
**PCT/US88/02486**

(87) International publication number:
**WO 89/01531 (23.02.89 89/05)**

(54) **ULTRA HIGH STRENGTH WELDABLE ALUMINUM-LITHIUM ALLOYS.**

(30) Priority: **10.08.87 US 83333**

(43) Date of publication of application:
**18.07.90 Bulletin 90/29**

(45) Publication of the grant of the patent:
**13.10.93 Bulletin 93/41**

(84) Designated Contracting States:
**AT BE CH DE FR GB IT LI LU NL SE**

(56) References cited:
**GB-A- 353 891**
**GB-A- 1 172 736**
**US-A- 1 620 082**
**US-A- 2 381 219**

**ALUMINIUM-TASCHENBUCH, 1983; p. 1000&NUM;**

(73) Proprietor: **Martin Marietta Corporation**
**6801 Rockledge Drive**
**Bethesda Maryland 20817(US)**

(72) Inventor: **PICKENS, Joseph, Robert**
**11603 35th Avenue**
**Beltsville, MD 20705(US)**
Inventor: **HEUBAUM, Frank, Herbert**
**1610 South Rolling Road**
**Baltimore, MD 21228(US)**
Inventor: **KRAMER, Lawrence, Stevenson**
**639 Portland Street**
**Baltimore, MD 21230(US)**
Inventor: **KUMAR, Kumarchandran, Sharvan**
**7401 Lesada Drive**
**Apartment 2D**
**Baltimore, MD 21207(US)**

(74) Representative: **Thomas, Roger Tamlyn**
**D. Young & Co.**
**21 New Fetter Lane**
**London EC4A 1DA (GB)**

ALUMINUM ALLOYS, vol. 1 of conf. proceedings of the Intl. Conference, University of Virginia, 15-20 June 1986, Chamelcon Press, London (GB); I.J.POLMEAR, pp. 661-674&NUM;

## Description

The present invention relates to lithium-containing alloys of aluminum which are characterized by a unique combination of mechanical and physical characteristics. Specifically, the preferred aluminum-copper-magnesium-silver-lithium alloys of this invention possess exceptionally high strength, ductility, low density, excellent weldability, and an exceptional natural aging response.

## BACKGROUND Of THE INVENTION

Aluminum and its alloys have long been known to have desirable properties such as low cost, relatively low density, corrosion resistance, and the ability to be fabricated relatively easily into a wide variety of shapes and configurations for various applications. Aluminum, as a base metal for alloying purposes, is generally approximately 99 per cent pure, with iron and silicon comprising the major impurities.

A number of aluminum alloys have been found having good weldability, and characteristics such as medium to high strength. Several of these aluminum alloy compositions are based upon aluminum-copper systems, wherein significant strengthening is induced by the precipitation of $CuAl_2$. In recent work, Polmear has disclosed an aluminum-copper-magnesium-silver alloy composition designed for elevated temperature service that has high room temperature strength. No weldability data for the alloy have been reported. Polmear reported that the presence of small amounts of magnesium and silver create a previously unreported novel precipitate (ie. omega phase) which additionally strengthens the alloy; such precipitates being coherent platelets of very minimal thickness, and high stability at slightly elevated temperatures. The strengthening in such alloys appears to be a function of the presence of both magnesium and silver. See "Development of an Experimental Wrought Aluminum Alloy for Use at Elevated Temperatures," Polmear, ALUMINUM ALLOYS: THEIR PHYSICAL AND MECHANICAL PROPERTIES, E. A. Starke, Jr. and T. H. Sanders, Jr., editors, Volume I of Conference Proceedings of International Conference, University of Virginia, Charlottesville, VA, 15-20 June 1986, pages 661-674, Chameleon Press, London.

Lithium additions to aluminum alloys are known to produce a variety of low density, age-hardenable alloys, such as alloys of aluminum-magnesium-lithium, and aluminum-copper-lithium. Such alloys have seen limited use, due to difficulty in melting and casting and relatively low ductility and toughness in wrought products. Among conventional commercially available aluminum-lithium alloys, the only generally accepted weldable aluminum-lithium alloy is the Soviet alloy 01420, as disclosed in British patent GB-A-1,172,736, of Fridlyander et al., comprising Al-5Mg-2Li. This alloy is reported to have medium to high strength, low density, and a modulus of elasticity higher than standard aluminum alloys. In U.S. patent US-A-2,381,219, of I.M. LeBaron assigned to Alcoa, aluminum base alloys containing Cu and Li with small Cd and Ag additions were disclosed. These alloys were all magnesium-free and weldability was not addressed. Furthermore, the surprising increase in strength observed in the Al-Li alloys of the present invention, containing both Ag and Mg, was not observed.

## SUMMARY OF THE INVENTION

By the addition of lithium to alloys similar to those suggested by Polmear, we have found that it is possible to achieve surprisingly high strength, a degree of ductility unexpected in lithium-containing aluminum alloys, good weldability, and a natural aging response superior to any previously reported for an aluminum alloy.

More specifically the invention provides an alloy consisting of from 2.0 to 9.8 weight percent of an alloying element selected from magnesium and mixtures of magnesium and copper, magnesium always being present in an amount more than 0.05 weight percent, from 0.01 to 2.0 weight percent silver, from 0.05 to 4.1 weight percent lithium, and less than 1.0 weight percent of a grain refining additive selected from zirconium, chromium, manganese, titanium, boron, hafnium, vanadium, titanium diboride, and mixtures thereof, the balance being aluminum plus incidental impurities. Preferred alloys of the invention are hereinafter set out in the dependent claims.

## BRIEF DESCRIPTION OF THE DRAWINGS

Figure 1: Isochronal aging curves for Al-Cu-Mg-Ag-Li Alloy 049.
Figure 2: Isochronal aging curves for Al-Cu-Mg-Ag-Li Alloy 051.
Figure 3: Isochronal aging curves for Al-Mg-Ag-Li Alloy 050.
Figure 4: Isothermal aging at 160 ° C for Alloy 049.

Figure 5: Isothermal aging at 160°C for Alloy 050.

Figure 6: Natural aging response of Alloy 049 extrusion with and without 3% stretch.

Figure 7: Natural aging response of Alloy 051 extrusion with and without 3% stretch.

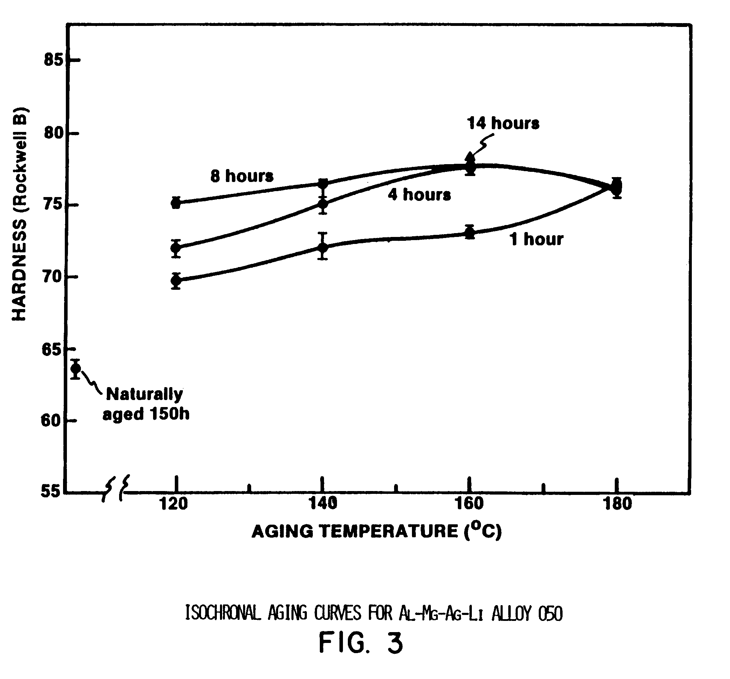

Figure 3: Natural aging response of Alloy 050 extrusion with and without 3% stretch.

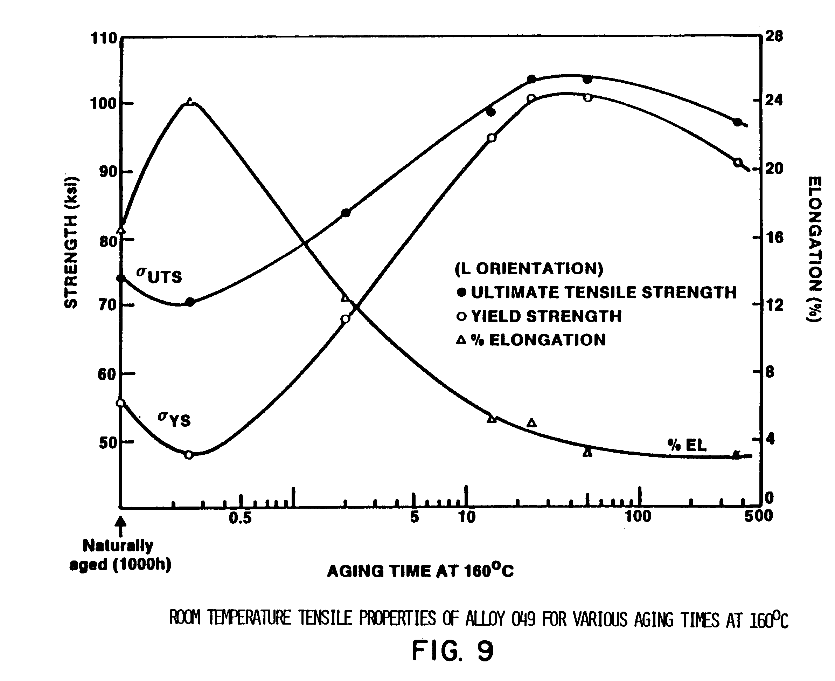

Figure 9: Room Temperature tensile properties of Alloy 049 for various aging times at 160°C (1 Ksi = 6.895 MPa).

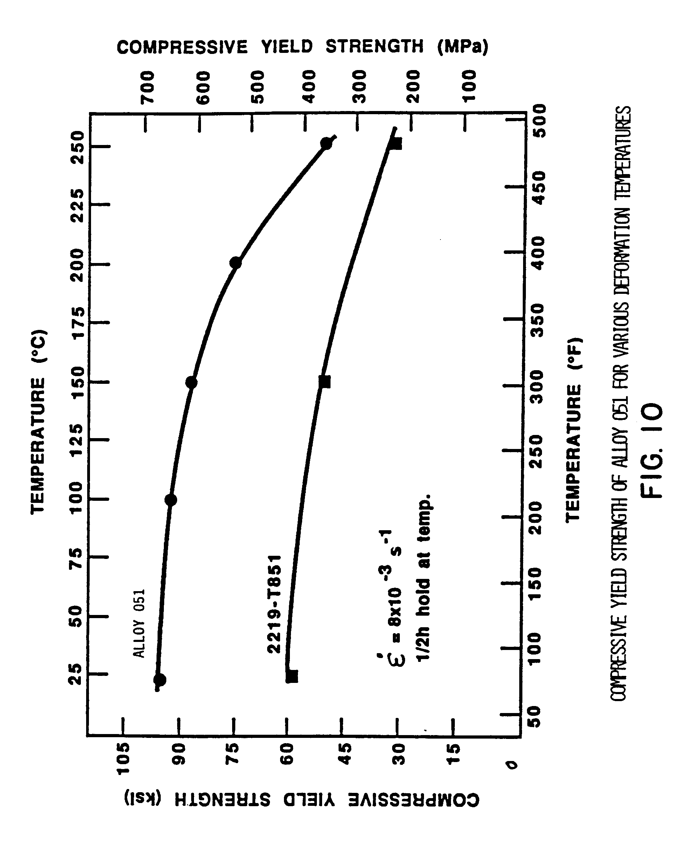

Figure 10: Compressive yield strength of Alloy 051 for various deformation temperatures.

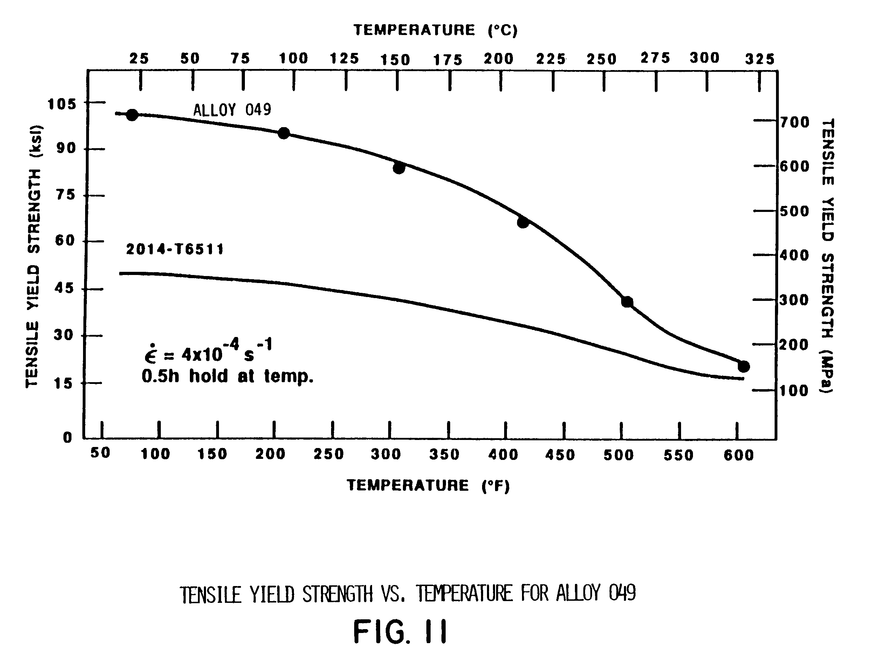

Figure 11: Tensile yield strength vs. temperature for alloy 049.

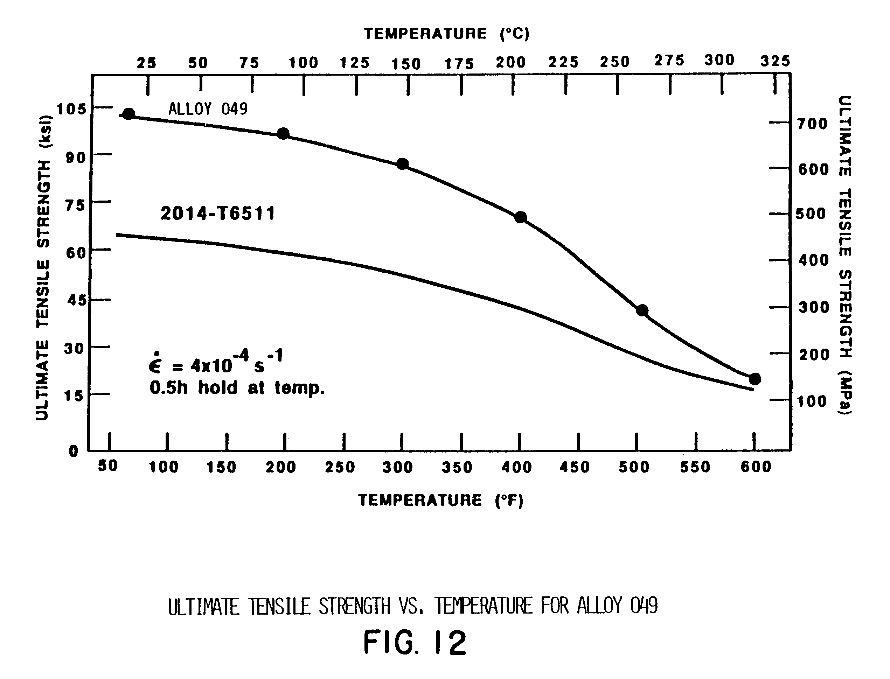

Figure 12: Ultimate tensile strength vs. temperature for alloy 049.

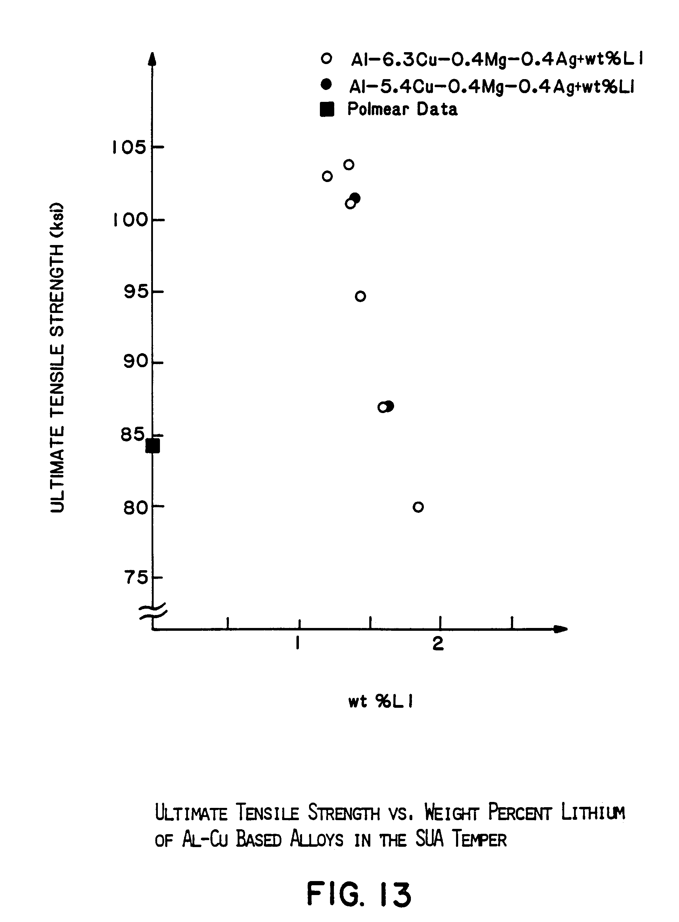

Figure 13: Ultimate tensile strength vs. weight percent lithium of Al-Cu based alloys in the SUA temper.

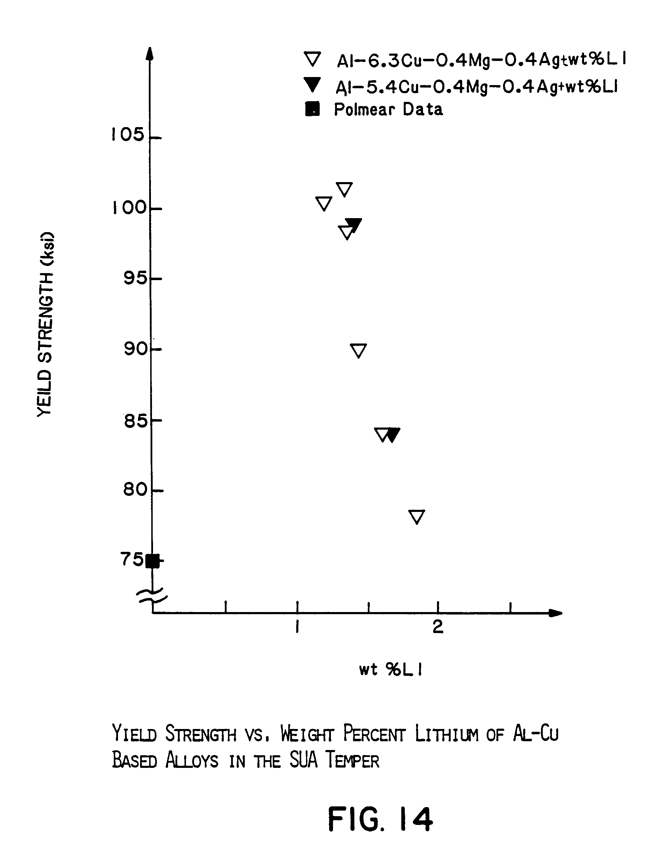

Figure 14: Yield strength vs. weight percent lithium of Al-Cu based alloys in the SUA tamper.

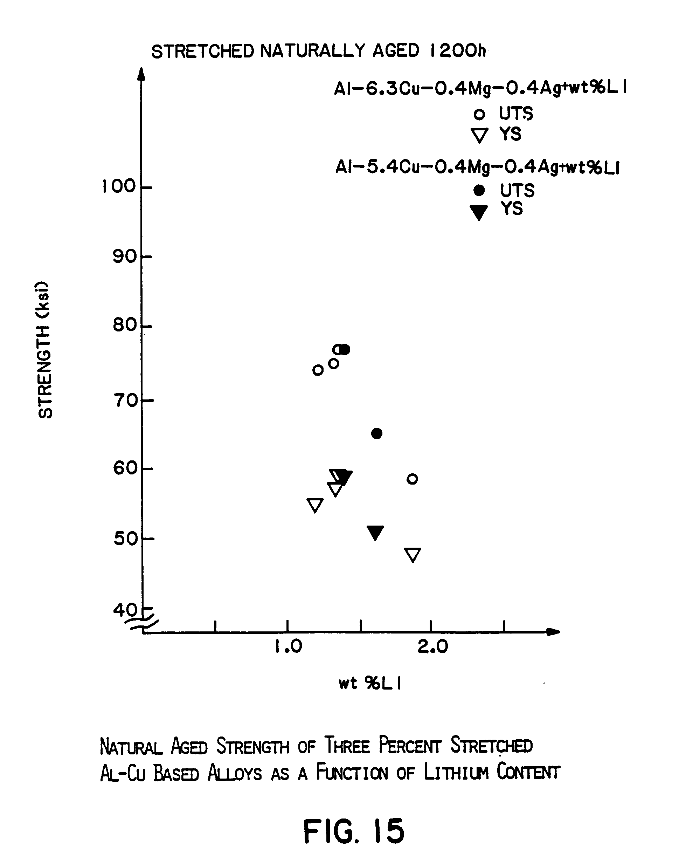

Figure 15: Natural aged strength of three percent stretched Al-Cu based alloys as a function of lithium content.

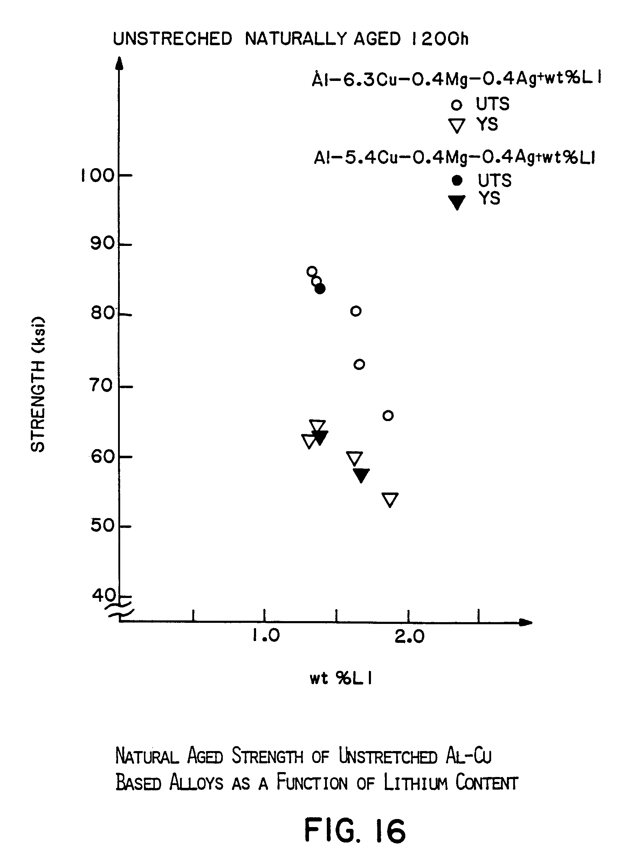

Figure 16: Natural aged strength of unstretched Al-Cu based alloys as a function of lithium content.

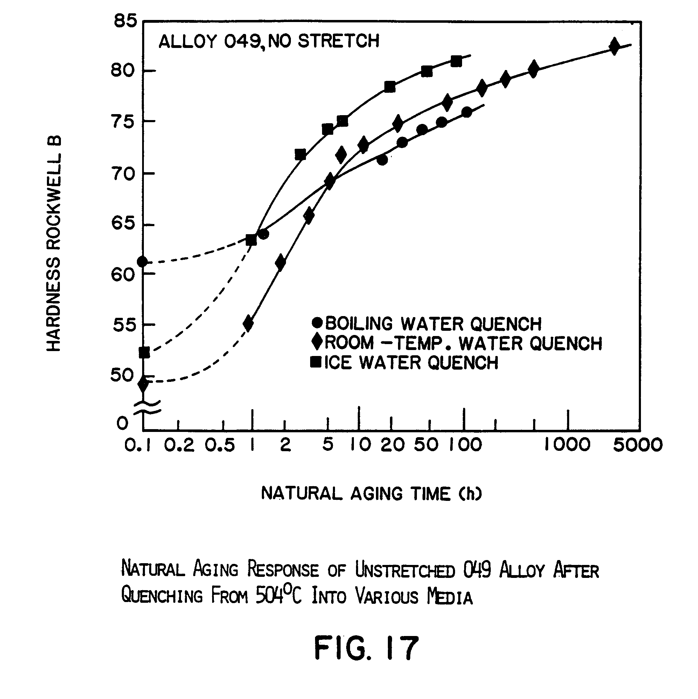

Figure 17: Natural aging response of unstretched 049 Alloy after quenching from 504°C into various media.

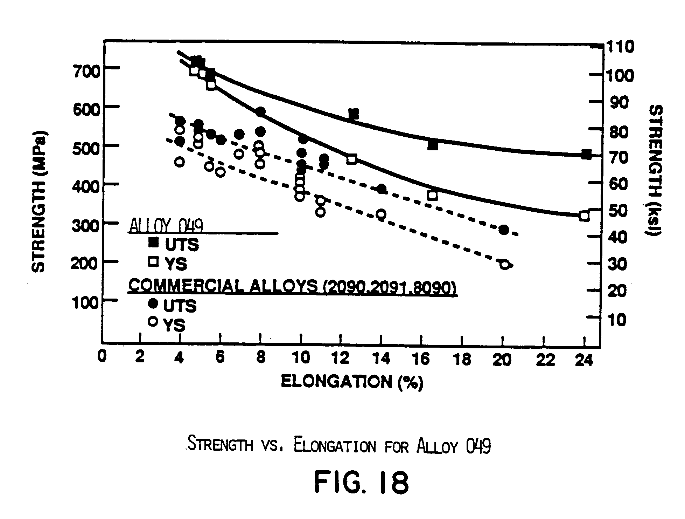

Figure 18: Strength vs. elongation for alloy 049.

## DETAILED DESCRIPTION OF PREFERRED EMBODIMENTS

The primary elements of the preferred alloys of the present invention are aluminum, copper, magnesium, silver and lithium, with grain refining additive elements such as zirconium. Although emphasis herein shall be placed upon use of zirconium for grain refinement, conventional grain refiners such as chromium, manganse, titanium, boron, vanadium, hafnium, titanium diboride, and mixtures thereof, may be used.

In general, the alloys of this invention comprise from 2.0 percent to 9.8 percent by weight for the total of copper plus magnesium, preferably from 2.5 to 8.5 percent, and more preferably from 3.1 to 7.5 percent. Silver may generally comprise from 0.01 to 2.0 percent by weight of the alloy, preferably 0.05 to 1.2 percent, and more preferably 0.10 to 1.0 percent. Lithium may comprise from 0.05 to 4.1 percent by weight of the alloy, preferably 0.20 to 3.1 percent, and most preferably 0.50 to 2.7 percent. Similarly, the total amount of grain refiner present may comprise from 0.05 to 1.0 percent by weight of the alloy, preferably 0.05 to 0.6 percent, and most preferably 0.05 to 0.5 percent.

The alloys may be broadly characterized as either aluminum-copper based, or aluminum-magnesium based, with compositions varying as set forth in Table I. In those alloys classified as aluminum-copper based, the copper may comprise from 2.0 to 6.8 percent by weight, preferably from 3.0 to 6.5 percent, and most preferably from 4.0 to 6.5 percent. In such alloys, the magnesium is always being present in an amount of more than 0.05 weight percent and up to 3.0 weight percent, preferably up to 2.0 percent, and most preferably 0.10 to 1.0 percent.

In those alloys classified as aluminum-magnesium based, the magnesium may comprise from 2.0 to 9.8 percent by weight, preferably from 2.5 to 7.0 percent, and most preferably from 3.0 to 5.5 percent. In such alloys, the copper may comprise from 0 to 1.5 percent by weight, preferably from 0.01 to 1.0 percent, and most preferably from 0.10 to 1.0 percent.

The alloys are stronger by far than conventional alloys of the closest known compositions, and stronger than would be predicted based on the scientific literature. Furthermore, they have greater specific properties than conventional weldable Al alloys. They also have a surprisingly strong natural aging response, which is extremely useful for welding. Their weldability, defined as the resistance to hot cracking that can occur during welding, is excellent. This is surprising, in view of the disappointing weldability of recently commercialized Al-Li alloys.

Three alloy melts having the compositions as set forth hereinafter in Table II were prepared. Each alloy was cast, homogenized, extruded, solutionized, quenched, and stretched, using the parameters set forth in Table III.

## Table I

### COMPOSITIONAL RANGES

|  | Broad | Preferred | Most Preferred |
|---|---|---|---|
| **Al-Cu Based** | | | |
| Cu | 2.0 - 6.8 | 3.0 - 6.5 | 4.0 - 6.5 |
| Mg | > 0.05 - 3.0 | > 0.05 - 2.0 | 0.10 - 1.0 |
| Ag | 0.01 - 2.0 | 0.05 - 1.2 | 0.10 - 1.0 |
| Li | 0.05 - 4.1 | 0.20 - 3.1 | 0.50 - 2.7 |
| Grain Refiners | 0.05 - 1.0 | 0.05 - 0.6 | 0.05 - 0.5 |
| Al | Balance | Balance | Balance |
| **Al-Mg Based** | | | |
| Cu | 0 - 1.5 | 0.01 - 1.0 | 0.10 - 1.0 |
| Mg | 2.0 - 9.8 | 2.5 - 7.0 | 3.0 - 5.5 |
| Ag | 0.01 - 2.0 | 0.05 - 1.2 | 0.10 - 1.0 |
| Li | 0.05 - 4.1 | 0.20 - 3.1 | 0.50 - 2.7 |
| Grain Refiners | 0.05 - 1.0 | 0.05 - 0.6 | 0.05 - 0.5 |
| Al | Balance | Balance | Balance |

Table II

COMPOSITIONS (Weight Percent)

| Heat # | | Cu | Mg | Ag | Li | Zr | H (ppm) | Al | Density g/cm$^3$ (lb/in$^3$) | |
|---|---|---|---|---|---|---|---|---|---|---|
| 049 | Planned | 6.30 | 0.40 | 0.40 | 1.40 | 0.14 | -- | Balance | | |
| | Actual | 6.20 | 0.37 | 0.39 | 1.21 | 0.17 | 0.201 | Balance | 2.73 | (0.098) |
| 050 | Planned | 0 | 5.00 | 0.40 | 2.00 | 0.14 | -- | Balance | | |
| | Actual | -- | 4.90 | 0.39 | 1.91 | 0.15 | 0.541 | Balance | 2.52 | (0.091) |
| 051 | Planned | 6.30 | 0.40 | 0.40 | 1.70 | 0.14 | -- | Balance | | |
| | Actual | 6.51 | 0.40 | 0.38 | 1.45 | 0.16 | 0.622 | Balance | 2.72 | (0.098) |

Table III

PROCESSING PARAMETERS

| Heat # | Pour Temperature (°C) | Homogenization Temp. (°C) Time (h) | Extrusion Ram* Temp. (°C) | Speed (in/min) (mm/min) | SHT (°C) | Stretch % |
|---|---|---|---|---|---|---|
| 049 | 740 | 450 (16h) + 510 (8h) | 370 | 0.10 / 2.54 | 504 | 3.6 |
| 050 | 740 | 450 (16h) + 510 (8h) | 375 | 0.10 / 2.54 | 465 | 3.0 |
| 051 | 740 | 450 (16h) + 510 (8h) | 373 | 0.12 / 3.05 | 504 | 3.0 |

*for 6-inch (15.24 cm) diameter billets in a 6.375-inch (16.20 cm) chamber extruding into 0.375 x 4.0 inch (0.95 x 10.16 cm) flat plate

AGING RESPONSE

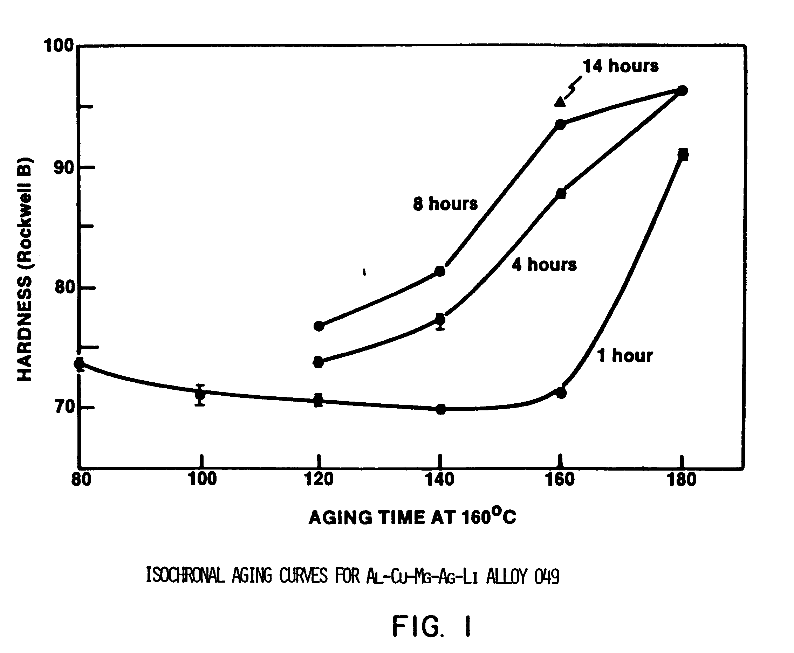

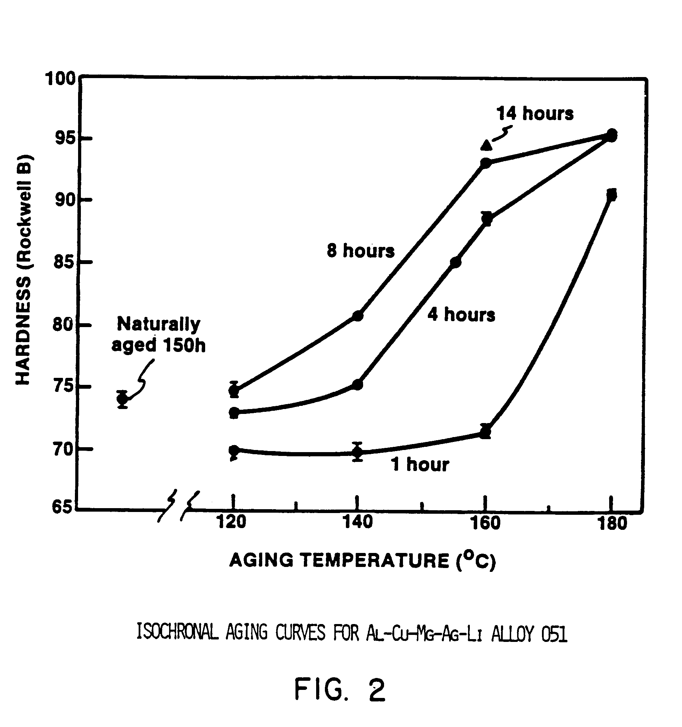

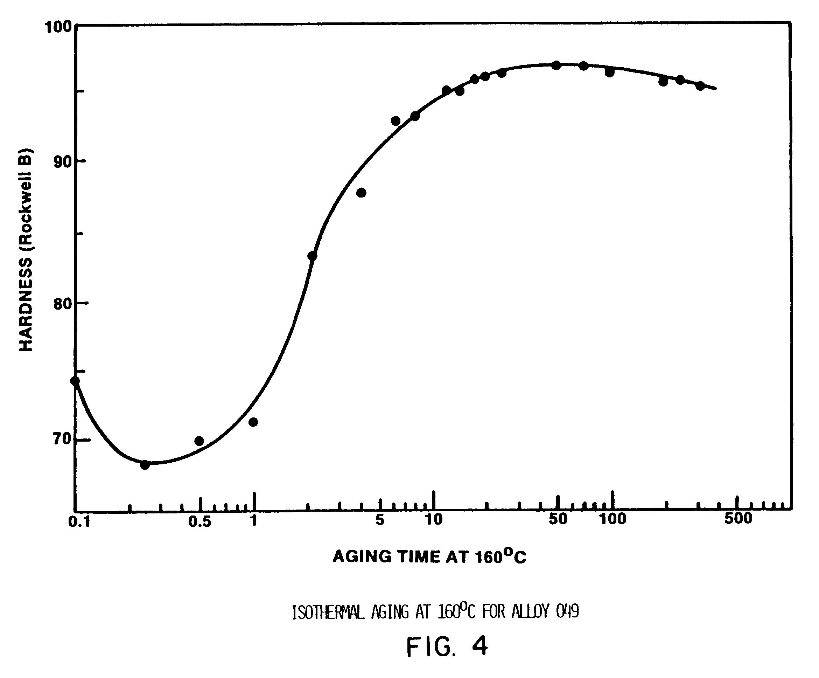

Isochronal aging curves were developed for the three alloys to identify advantageous aging temperatures, i. e., those which would produce high hardness in a practical period of time (Figures 1-3). Then, artificial aging curves were developed at selected temperatures and natural aging studies were performed with different amounts of stretch (see Figures 4 through 8). The copper-containing alloys, e.g., alloy 049, display a rapid and extremely strong aging response at 160 °C (Fig. 4), a temperature where Al-Cu alloys normally respond sluggishly, although a decrease in hardness is noted during the early stages of aging (i.e., "reversion").

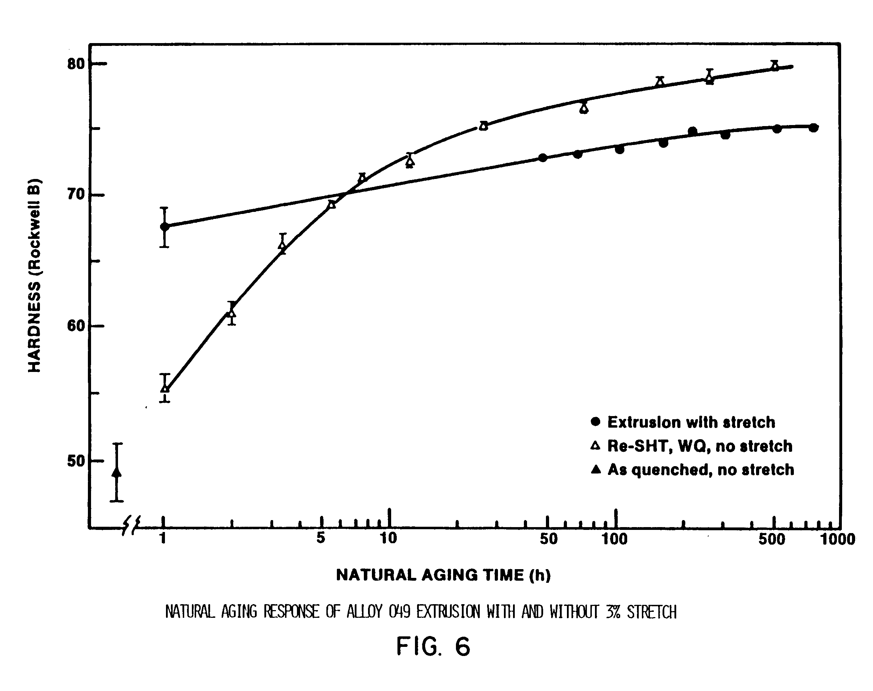

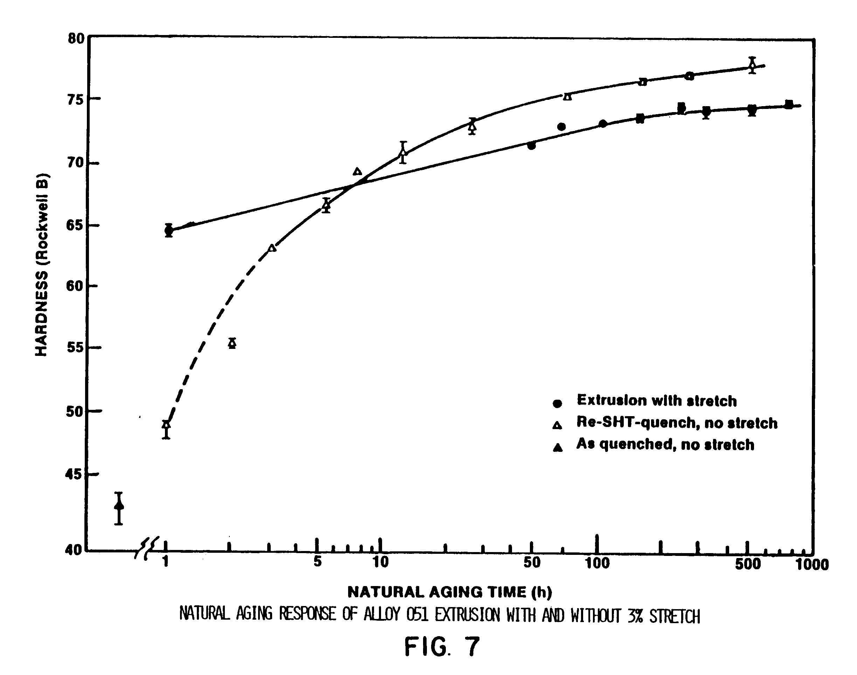

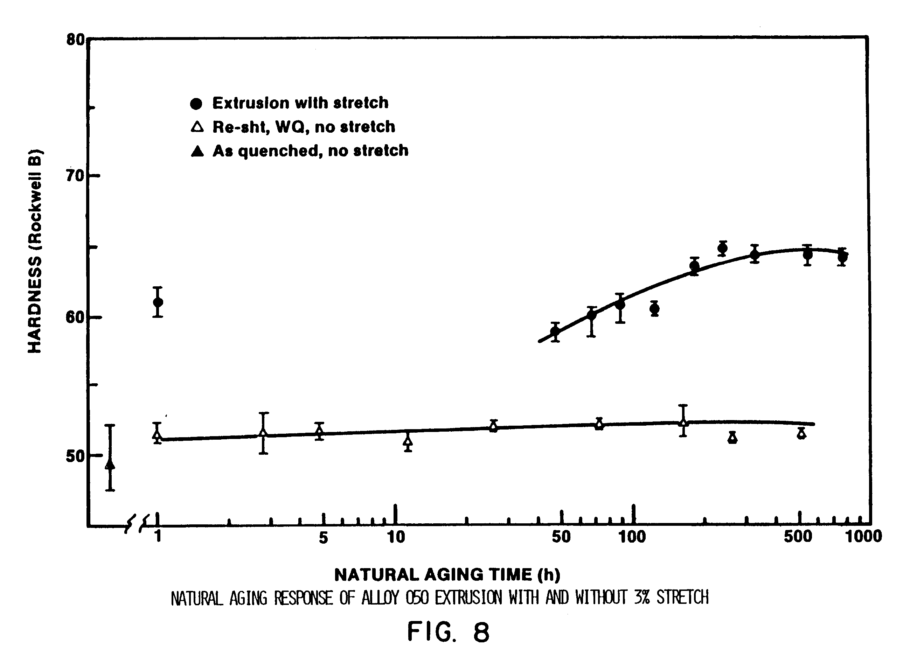

The Al-Cu-Mg-Ag-Li alloys show a natural aging response that is extraordinary, and particularly significant in terms of utility (Figures 6, 7). The response is so rapid for alloy 049 that within ten hours after quenching, hardness increases from 48 to 72 R$_B$,both with a 3% cold stretch prior to aging, and also without prior cold work. This is extremely important because all existing pilot-commercial Al-Li alloys have insufficient strength to replace existing high technology alloys unless they are cold worked prior to aging. This is especially problematical for forging alloys, where it is most often not practical to induce cold work prior to aging. It is significant that the natural aging response without cold work is ultimately greater than that with cold work, an extremely beneficial attribute for forging. This natural aging response is observed for both heats 049 and 051. Alloy 050 displayed a slight natural aging response with no stretch, and a more rapid response with stretch (Figure 8).

In contrast, known 2xxx alloys have a very slight, insignificant natural aging response without prior cold work. Ultimate tensile strengths such as were obtained with the subject alloys were totally unanticipated on the basis of 2xxx alloys.

TENSILE PROPERTIES

The alloys were tested in tension in various aging conditions in both the longitudinal (L) and long transverse (LT) directions. In Table IV, one can see that the properties are clearly exceptional and substantially stronger than any conventional weldable aluminum alloy, and also stronger than Soviet alloy 01420, the only commercial Al-Li alloy designed to be weldable.

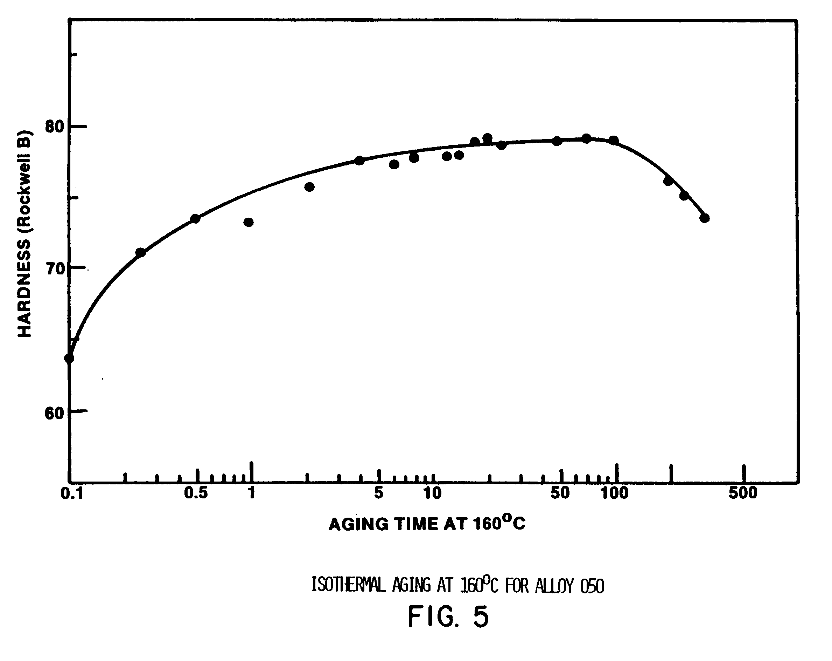

The highest strengths reported are generally in the "slightly underaged" (SUA) temper, where toughness is expected to be higher than in the peak-aged temper. One can look at the artificial aging curves (Figures 4 and 5) to assess the degree of underaging in the 160°C (24h) temper reported.

The new alloys also demonstrate unexpectedly good properties in the naturally aged condition (Table V). In fact, Al-Cu-Mg-Ag-Li alloy 049 is stronger in the naturally aged condition than any conventional weldable aluminum alloy is in its peak strength condition. This has important implications for welding, where a strong natural aging response provides the potential to restore strength in weldments. Moreover, it is extremely significant that this exceptional natural aging response exists without prior cold work. Consequently, a useful vehicle exists to increase the strength of weldments and forgings in which inducing cold work is often not practical. Even better naturally aged properties were obtained in subsequently prepared alloys, as described hereinafter (Table XIV). Alloy 050, an Al-Mg-Ag-Li alloy, in the stretched and naturally aged condition (T3 temper) is essentially as strong as alloy 01420 in the artificially aged condition. The alloys of the present invention also have superb specific properties, With the specific strength of 049 almost twice that of 2219 T81 (Table VI).

With artificial aging, the experimental alloys 049 and 051 are actually as strong as, or stronger than,, any ingot metallurgy aluminum base alloy, both weldable and non-weldable, as can be seen by comparison of Tables V and VII, and Figure 9.

In contrast, the Ag-containing, Mg-free, Al-Li alloy developed by LeBaron did not show the surprising strength increases contained in the present invention. In fact, the presence of Ag decreased strength slightly (see Table VIII).

The present Al-Cu-Mg-Ag-Li alloys (049 and 051) show a significant strength increase with respect to the experimental Al-Cu-Mg-Ag-Mn-Zr-Ti-Fe-Si alloy developed by Polmear. As may be seen, improvements of 34 percent and 23 percent were observed for yield strength and ultimate tensile strength, respectively, for alloy 049 when compared to the Polmear alloy (Table VIII).

## Table IV

### TENSILE PROPERTIES OF EXPERIMENTAL AND CONVENTIONAL WELDABLE ALLOYS

| ID # | Orientation | Aging Temp °C | (time) (h) | $E_{Measured}$ (x $10^3$ ksi) | YS (ksi) | UTS (ksi) | El % | Density (lb/in$^3$) |
|------|-------------|------|------|------|------|------|------|------|
| **Novel Weldable Alloys (SUA)** | | | | | | | | |
| 049 | L | 160 | (24) | 11.3 | 100.4 | 103.3 | 5.1 | 0.098 |
|      | LT | 160 | (24) | 11.3 | 94.1 | 97.8 | 1.9 | |
| U51 | L | 160 | (24) | 11.5 | 89.8 | 94.9 | 5.2 | 0.098 |
|      | LT | 160 | (24) | 11.3 | 90.2 | 92.8 | 1.3 | |
| 050 | L | 160 | (14) | 11.1 | 53.5 | 72.5 | 7.7 | 0.091 |
|      | LT | 160 | (14) | 11.1 | 52.5 | 76.2 | 14.1 | |
| **Conventional Weldable Alloys** | | | | | | | | |
| 2219 T81 | L | | | 10.6** | 44.0** | 61.0** | 6.0** | 0.102 |
| 5083 H321 | L | | | 10.3*** | 31.0*** | 44.0*** | 12.0*** | 0.096*** |
| 7039 T61 | L | | | 10.4*** | 50.0*** | 60.0*** | 14.0*** | 0.099*** |
| 01420 | L | | | 11.1* | 42.2* | 61.7* | 16.9* | 0.0908* |

\*    Typical actual data from 50-lb heats.
\*\*   Minima for plate. The minima for extrusion are 42.0 ksi YS, 58.0 ksi UTS.
\*\*\*  Handbook Minima

1 Ksi = 6.895 MPa and 0.1 lb/in$^3$ = 2.786 g/cm$^3$

EP 0 377 640 B1

## Table V

## TENSILE PROPERTIES OF ALLOYS

| Alloy # | Orientation | Aging Condition Temp. °C | (time) (h) | YS (ksi) | UTS (ksi) | El (%) |
|---|---|---|---|---|---|---|
| | | **Novel Alloys in Various Tempers** | | | | |
| 049 | L | NA* | (1000h) | 55.6** | 74.0** | 16.5 |
| | LT | NA* | (3000h) | 52.0** | 71.5** | 21.7 |
| | L | 160 | (14h) | 94.6 | 98.2 | 5.2 |
| | L | 160 | (24h) | 100.4 | 103.2 | 5.1 |
| 050 | L | NA* | (1000h) | 44.9** | 59.4** | 11.9 |
| | LT | NA* | (3000h) | 38.6** | 59.4** | 16.9 |
| | L | 160 | (14h) | 53.5 | 72.5 | 7.7 |
| | LT | 160 | (14h) | 52.5 | 76.2 | 14.1 |
| | | **Handbook Property Minima (for extrustions)** | | | | |
| 2219 | | T81 | | 42.0 | 58.0 | 6.0 |

* NA = naturally aged with aging time following

** Cold stretched three percent prior to natural aging.

1 Ksi = 6.895 MPa

## Table VI

### SPECIFIC PROPERTIES OF EXPERIMENTAL ALLOYS

### (Slightly Underaged Temper)

| Alloy # | UTS/$\rho$ (x $10^3$ in) | E/$\rho$ (x $10^6$ in) |
|---|---|---|
| **Novel Al-Li Weldable Alloys** | | |
| 049 | 1053 | 115 |
| 050 | 798 | 122 |
| 051 | 967 | 117 |
| **Handbook Property Minima** | | |
| 2219 T81 | 592 | 103 |

1 inch = 2.54 cm

EP 0 377 640 B1

## Table VII

### Highest Strength Non-Weldable
### Aluminum I/M Alloys (Extrusions, Typical Values)

| Alloy | System | YS (ksi) | UTS (ksi) | El % | E (x 10³ ksi) | Density (lb/in³) |
|-------|--------|----------|-----------|------|----------------|-------------------|
| 7001 T6 | Al-Zn-Mg | 91 | 98 | 9 | 10.3 | 0.103 |
| 7178 T6 | Al-Zn-Mg | 78 | 88 | 11 | 10.3 | 0.102 |
| 8091 T651 | Al-Li-Cu-Mg | 88.5 | 91.4 | 4 | 11.7 | 0.0917 |

1 Ksi = 6.895 MPa and 0.1 lb/in³ = 2.786 g/cm³

EP 0 377 640 B1

## Weldability

### Fusion Weldability

### Tungsten Inert Gas

Alloy 049 was manually TIG (tungsten inert gas) welded with both conventional 2319 filler and parent metal filler. Alloy 050 was manually TIG welded with both conventional 5356 filler and parent metal filler. V-notch butt weldments with a fair amount of constraint were made. TIG (tungsten inert gas) welding. The V-notch weldment does not produce weldments of particularly high joint efficiency (i.e. strength weldment/strength parent alloy). However, constrained V-notch butt weldments are instructive for demonstrating weldability when welding parameters are not known for a new material. In addition, automatic TIG square butt weldments were made on alloys 049, 050, and 051 using conventional fillers.

Whereas weldability is defined as the resistance to hot cracking, none of the weldments displayed any hot cracking susceptibility despite the constraint imposed. Furthermore, the welding parameters used (Table

## Table VIII

### TENSILE PROPERTIES OF VARIOUS ALLOYS

| Alloy | YS (ksi) | UTS (ksi) | El % |
|---|---|---|---|
| LeBaron<br>Al - 4.5 Cu - 0.7 Mn - 0.25 Si - 0.15 Fe - 1.0 Li - 0.15 Cd | 75.9 | 82.1 | 7.8 |
| LeBaron<br>Al - 4.5 Cu - 0.8 Mn - 0.25 Si - 0.15 Fe - 1.0 Li - 0.15 Cd - 0.15 Ag | 74.5 | 80.6 | 7.5 |
| Polmear experimental alloy<br>Al - 6.7 Cu - 0.46 Mg - 0.50 Ag - 0.48 Mn - 0.18 Zr - 0.07 Si - 0.1 Fe - 0.06 Ti | 75.0 | 84.1 | 7.5 |
| 049<br>Al - 6.2 Cu - 0.37 Mg - 0.39 Ag - 1.21 Li - 0.17 Zr | 100.4 | 103.3 | 5.1 |

1 Ksi = 6.895 MPa

IX), which were selected based on analogy to conventional alloys, led to good metal flow during welding and caused the welders to claim that the alloys welded as easily as conventional alloys 2219 and 5083.

The alloys had low hydrogen content (Table II), yet weldments did display gas-formed pores at the weld bead-parent alloy interface. The porosity is believed to have resulted from improper handling during welding. This porosity caused the weldments to fail in tension at that interface. Nevertheless, the strengths of several weldments are quite good (see Table X) and suggest that very good weld strengths are possible. Corrective care to weldment pretreatment was exercised in subsequent welding tests, and no significant porosity was detected by radiographic techniques. In fact, TIG weldments of an 049-type alloy (059, described hereinafter) using parent metal filler, passed the very stringent quality control production test for porosity which is used on the Titan missile.

Electron Beam Welding

Autogenous electron beam (EB) weldments were performed on an alloy similar to alloy 049, alloy 061 described hereinafter. A square butt weld was fabricated along the longitudinal axes of two 100mm wide plates of alloy 061. The welding was performed at 140 kv potential and 80 mA current at a travel speed of 500 mm/min. in a single pass.

The alloy proved to be readily weldable by this technique, and the two 18mm thick plates were easily joined in the full penetration pass.

The weldments were radiographed and showed negligible porosity, and long transverse tensile properties were determined. The tensile strengths were exceptionally high, and are from material in the as-welded condition with only 12 days natural aging (see Table XI). Although the apparent elongation over the 4 inch (10.16 cm) length is 0.3 percent, the deformation was localized to the narrow (about 5mm) weld zone, so the true strain-to-failure ratio in this localized region is much higher. This is supported by the much higher 9% reduction in area.

Friction Weldability

Several specimens of 049-type alloy 061 were stretched to 0.5 inch (1.27 cm) diameter, 2 inch (5.08 cm) cylindrical rods, and were friction welded using parameters in Table XII. Although a detailed study was not undertaken to develop optimized friction welding parameters, good strengths were obtained (Table XII). For example, the tensile strength of joints were as high as 57.9 ksi (400 MPa) with no post-welding heat treatment, demonstrating that this alloy is amenable to friction welding.

## Table IX

### Welding Parameters Used for Novel Alloys

**MANUAL TIG PROCEDURE**

| Alloy | Filler Material | Voltage (volts) | Current (amps) | # of Passes | Time per pass second(s) | Length (inches) |
|-------|-----------------|-----------------|----------------|-------------|-------------------------|-----------------|
| 049 | 2319 | 18-24 | 190-250 | 4 | 155, 120, 121, 148 | (10 in.) |
| 049 | Parent | 20-24 | 150-205 | 4 | 71, 61, 41, 53 | (5 in.) |
| 050 | 5356 | 18-24 | 150-210 | 4 | 161, 138, 112, 115 | (10 in.) |
| 050 | Parent | 19-22 | 160-210 | 4 | 63, 52, 46, 48 | (5 in.) |

3/16 in. diameter, 2% thoriated tungsten electrode
Coverages: 100% He at 8 cu ft/h or 100% Ar at 25 cu ft/h.
75° V-Notch
Preheat base metal to 170°F (76.7°C)
Gas Cup size: 3/8 in.

**AUTOMATIC TIG PROCEDURE**

| Weld Pass | Voltage (Volts) | Current (Amps) | Travel Speed (in/min) | Wire Speed (in/min) |
|-----------|-----------------|----------------|-----------------------|---------------------|
| Seal Pass | 11.2 | 190 | 12.0 | -- |
| Penetration Pass | 11.4 | 245 | 9.8 | -- |
| Filler Pass | 11.7 | 195-200 | 9.8 | 46-55 |

DC current straight polarity
049 and 051 used 2319 filler wire
050 used 5356 filler wire, square butt welds
Coverages: 100% He at 8 cu ft/h. or 100% ar at 25 cu ft/h.

1 inch = 2.54 cm and 1 cu ft = 0.0283 $m^3$

EP 0 377 640 B1

Table X

## Tensile Properties from TIG Weldments

| Parent Alloy | Filler | Post-Welding Temper | Weld Bead | YS (ksi) | UTS (ksi) | El* (%) | Type of TIG Welding |
|---|---|---|---|---|---|---|---|
| 049 | 2319 | NA (500h) | On | 31.6 | 38.9 | 3.0 | Manual |
| 049 | 2319 | NA (500h) | Flush | 28.8 | 39.0 | 3.0 | Manual |
| 049 | 2319 | NA (500h) | Flush | 31.8 | 47.5 | 5.7 | Auto |
| 049 | 2319 | SHT 504°C/WQ/NA(770h) | Flush | 42.8 | 61.0 | 9.5 | Auto |
| 049 | 2319 | SHT 504°C/WQ/160°C(24h) | Flush | 56.8 | 58.6 | 0.4 | Auto |
| 049 | 2319 | SHT 504°C/WQ/NA(770h) | Flush | 33.0 | 51.3 | 6.0 | Manual |
| 049 | 049 | NA (500h) | On | 38.4 | 44.0 | 0.5 | Manual |
| 049 | 049 | NA (500h) | Flush | 38.5 | 40.6 | 0.5 | Manual |
| 050 | 5356 | NA (500h) | On | 22.3 | 40.6 | 6.5 | Manual |
| 050 | 5356 | NA (500h) | Flush | 22.5 | 43.2 | 14 | Manual |
| 050 | 5356 | NA (500h) | Flush | 24.6 | 48.0 | 13 | Auto |
| 050 | 050 | NA (500h) | On | 27.1 | 42.8 | 6 | Manual |
| 050 | 050 | NA (500h) | Flush | 22.5 | 51.0 | 17 | Flush |

All alloys were in the SUA temper before welding
* Elongation is from a 1-inch gage length.

1 Ksi = 6.895 MPa and 1 inch = 2.54 cm

EP 0 377 640 B1

## Table XI

### Long Transverse Electron Beam Weldment Properties
of Alloy 061

| Temper Before Welding Welding | Apparent YS | UTS ksi | Apparent Elongation % | Reduction in Area % |
|---|---|---|---|---|
| SUA | 60.5 | 62.4 | 0.3 | 9 |
| SUA | 60.4 | 63.0 | 0.3 | 9 |

As welded, NA (12 days).

1 Ksi = 6.895 MPa

EP 0 377 640 B1

## Table XII

### Friction Welding of Alloy 061 in SUA Temper

| Rotational Speed (rpm) | Friction Force (lbs) | Forging Force (lbs) | Condition After Welding | Tensile Strength (ksi) |
|---|---|---|---|---|
| 3000 | 1200 | 2400 | NA (4h) | 43.8 |
| 3000 | 2000 | 3000 | NA (4h) | 44.5 |
| 3000 | 4000 | 5000 | NA (24h) | 40.5 |
| 3000 | 4000 | 5000 | NA (192h) | 57.9 |
| 3000 | 4000 | 5000 | AW~160°C (20h) | 59.6 |

*Water quenched 15s after friction welding.

1 Ksi = 6.895 MPa and 1 lb = 0.454 kg

## ELEVATED TEMPERATURE DATA

Elevated temperature properties were determined using hot compression tests on alloy 051 and conventional weldable alloy 2219, the leading conventional alloy for 120°C service. (Table XIII, Figure 10).

The compression tests were conducted at a strain rate of $8 \times 10^{-3}$ s$^{-1}$ after holding at temperature for 30 minutes. The novel alloy showed exceptional warm temperature strength, well above that of 2219 (see Figure 10), throughout the entire temperature range investigated, which is considered to be beyond the useable temperature range of 2219. In fact, alloy 051 has considerably higher yield strength at 200°C than 2219 has at room temperature, and very nearly the same yield strength at 250°C that 2219 has at room temperature.

Several tensile tests were performed at elevated temperatures (Tables XIII, Figures 11 and 12) and strength values were found to be exceptional. Both tensile and yield strengths are superior to alloy 2014.

## Table XIII
### Elevated Temperature Data for Novel Alloys and 2219

Elevated Temperature Compression Data of Novel Alloy and 2219

| Alloy | Orientation | Deformation Temperature (°C) | YS* (ksi) |
|---|---|---|---|
| 051 | L | 24 | 94.3 |
| | | 100 | 92.0 |
| | | 150 | 84.8 |
| | | 200 | 74.1 |
| | | 250 | 52.1 |
| 2219-T87 | L | 24 | 56.0 |
| | | 150 | 49.4 |
| | | 250 | 31.3 |

Elevated Temperature Tensile Data for Alloy 049

| Temper | Deformation Temperature °C | YS ksi | UTS ksi | El (%) | E (x 10$^6$ psi) |
|---|---|---|---|---|---|
| SUA | 93 | 95.3 | 99.0 | 8.1 | 12.1 |
| SUA | 93 | 94.4 | 94.8 | 6.11 | 11.5 |
| NA | 93 | 55.9 | 70.6 | NA | 11.5 |
| SUA | 150 | 86.7 | 90.1 | 6.2 | 11.2 |
| SUA | 150 | 86.1 | 89.2 | 7.2 | 11.4 |
| NA | 150 | 79.6 | 83.4 | 10.5 | 10.8 |

*0.2 percent off set yield strength.

1 Ksi = 6.895 MPa and 1 psi = 6.895 kPa

## ADDITIONAL ALLOYS

Having obtained the exceptional properties demonstrated for alloys 049-051, ten additional 50-1b. heats were fabricated in accordance with the compositions set forth in Table XIV. Several tests were near-duplicates of 049 and 050, to demonstrate reproducibility, and others were attempts to improve specific properties. For example, Al-Cu based alloys similar to 049 were fabricated with higher Li levels to decrease density and increase modulus. Other Al-Cu based alloys were made with lower Cu content to decrease density and to determine whether hot cracking susceptibility increases at the Cu level investigated, as predicted by data from Al-Cu binary alloys. Meister and Martin, "Welding of Aluminum and Aluminum Alloys," Defense Metals Information Center, Battelle Memorial Institute, Columbus, Ohio, 1967.)

Two Al-Mg based alloys similar to 050 were prepared, one of the same nominal composition (062), and one fabricated with 0.2 percent Cu to assess the effect of Cu on strength. The alloys were cast and homogenized using parameters similar to those in Table II. Extrusion and processing parameters are in Table XIV, and comparative tensile properties are shown in Tables XV.

The near duplicate tests of alloy 049 (i.e. alloys 059, 060, 061) reproduced the unexpectedly high properties of alloy 049 superbly (see Table XVI). The increased addition of Li to Al-Cu based alloy (064, 065, 066, 067) did indeed decrease density (Table XIV) but had an unexpected effect on strength. Both tensile and yield strength decreased, in the slightly underaged condition, with increasing Li content in the range studied (see Figures 13, 14). The same trend was observed for the naturally aged data both with and

18

without cold stretch (see Figures 15, 16). This strength decrease is the opposite effect for virtually all practical Al-Cu-Li alloy compositions. In fact, very recent Japanese work (Yo Kojima et al., "Effect of Lithium Addition on the Elevated Temperature Properties of 2219 Alloy," Journal of Japan Institute of Light Metals, Vol. 36, No. 11, Nov. 1986, pp. 737-743.) related to Li-modified 2219 alloys (Al - 6 wt% Cu) shows a directly related increase in yield strength with increasing Li content from 0 to 2 weight percent (see Table XVII).

The natural aging tensile data for alloys similar to type 049 alloys are higher than any reported in the literature for aluminum alloys. In fact, the tensile strengths without cold work, 84.2 to 86.1 ksi, are significantly higher than the properties of 2219 in the fully artificially aged condition. (See Table XVIII.)

Despite the fact that strength decreases with Li content from about 1.2 percent to about 1.9 weight percent, the strengths at the higher lithium level alloys are still competitive with other high strength alloys as well as conventional alloys. Thus, there are several technologically useful families of alloys within the scope of the present invention; for example, an ultra high-strength alloy (049) with a four percent decrease in density with respect to 2219, and a high strength alloy (065) with a six percent or higher density decrease.

Attempts to decrease density by lowering the copper content were successful in that strength did not change with a decrease in copper content from 6.3 to 5.4 weight percent at both the 1.4 weight percent and 1.7 weight percent lithium levels.

Table XIV

EXTRUSIONS OF ADDITIONAL COMPOSITIONS

| Alloy ID# | | Planned Compositions (wt. %) | | | | | Ext. Temp (°C) | Ext. Ram Speed (in/min) | Extrusion Dimension (in) | Density g/cm³ | (lb/in³ |
|---|---|---|---|---|---|---|---|---|---|---|---|
| | | Cu | Mg | Ag | Li | Zr | | | | | |
| 058 | Planned | 6.30 | 0.40 | 0.40 | 1.40 | 0.15 | 358 | 0.10 | 2 DIA rod | 2.71 | (0.098) |
| | Measured | 5.79 | 0.38 | 0.40 | 1.34 | 0.17 | | | | | |
| 059 | Planned | 6.30 | 0.40 | 0.40 | 1.40 | 0.15 | 364 | 0.12 | 4 x 3/8 | 2.72 | (0.098) |
| | Measured | 6.21 | 0.40 | 0.43 | 1.39 | 0.16 | | | | | |
| 060 | Planned | 6.30 | 0.40 | 0.40 | 1.40 | 0.15 | 355 | 0.20 | 4 x 3/8 | 2.72 | (0.098) |
| | Measured | 6.18 | 0.40 | 0.42 | 1.32 | 0.155 | | | | | |
| 061 | Planned | 6.30 | 0.40 | 0.40 | 1.40 | 0.15 | 364 | 0.12 | 2 x 3/4 | 2.72 | (0.098) |
| | Measured | 6.33 | 0.41 | 0.42 | 1.34 | 0.16 | | | | | |
| 062 | Planned | 0.00 | 5.00 | 0.40 | 2.00 | 0.15 | 349 | 0.12 | 2 x 3/4 | 2.53 | (0.091) |
| | Measured | ---- | 5.40 | 0.42 | 2.10 | 0.135 | | | | | |
| 063 | Planned | 0.20 | 5.00 | 0.40 | 2.00 | 0.15 | 327 | 0.08 | 4 x 3/8 | 2.50 | (0.090) |
| | Measured | 0.22 | 5.25 | 0.41 | 2.02 | 0.14 | | | | | |
| 064 | Planned | 6.30 | 0.40 | 0.40 | 1.70 | 0.15 | 356 | 0.12 | 4 x 3/8 | 2.69 | (0.097) |
| | Measured | 6.30 | 0.41 | 0.41 | 1.62 | 0.155 | | | | | |
| 065 | Planned | 6.30 | 0.40 | 0.40 | 2.00 | 0.15 | 344 | 0.12 | 4 x 3/8 | 2.68 | (0.097) |
| | Measured | 6.31 | 0.46 | 0.41 | 1.86 | 0.145 | | | | | |
| 066 | Planned | 5.40 | 0.40 | 0.40 | 1.40 | 0.15 | 328 | 0.12 | 4 x 3/8 | 2.70 | (0.098) |
| | Measured | 5.56 | 0.46 | 0.41 | 1.38 | 0.165 | | | | | |
| 067 | Planned | 5.40 | 0.40 | 0.40 | 1.70 | 0.15 | 334 | 0.12 | 4 x 3/8 | 2.67 | (0.096) |
| | Measured | 5.55 | 0.44 | 0.40 | 1.66 | 0.16 | | | | | |

1 inch = 2.54 cm

## Table XV

### Tensile Properties of Al-Mg Based Alloys

| Alloy | Temper | Orientation | YS (ksi) | UTS (ksi) | El (%) |
|-------|--------|-------------|----------|-----------|--------|
| 050 | SUA | L | 53.5 | 72.5 | 7.7 |
|  | SUA | LT | 52.5 | 76.2 | 14.1 |
|  | T3* | L | 44.9 | 59.4 | 11.9 |
| 062 | SUA | L | 55.3 | 75.2 | 9.2 |
|  | T3* | L | 45.5 | 61.8 | 15.1 |
| 063 | SUA | L | 57.9 | 75.5 | 6.7 |
|  | SUA | LT | 51.9 | 73.3 | 9.2 |
|  | T3* | L | 46.1 | 60.0 | 12.4 |
| 01420 | SUA | L | 42.2 | 61.7 | 16.6 |
|  | SUA | LT | 38.2 | 61.7 | 16.9 |

* T3 = stretched 3%, natural aged 1200 h.

1 Ksi = 6.895 MPa

## Table XVI

### Slightly Underaged Tensile Properties
### of Near Duplicate Heats of Alloy 049

| Alloy ID# | Orientation | Aging Temp °C | (time) (h) | YS (ksi) | UTS (ksi) | El % |
|-----------|-------------|---------------|------------|----------|-----------|------|
| 049 | L | 160 | (24) | 100.4 | 103.3 | 5.1 |
|     | LT | 160 | (24) | 94.1 | 97.8 | 1.9 |
| 059 | L | 160 | (20) | 99.8 | 102.4 | 5 |
|     | LT | 160 | (20) | 95.8 | 99.4 | 3 |
| 060 | L | 160 | (24) | 98.7 | 101.5 | 5.4 |
|     | LT | 160 | (24) | 94.1 | 99.0 | 3.0 |
| 061 | L | 160 | (24) | 101.4 | 104.0 | 4.7 |

1 Ksi = 6.895 MPa

EP 0 377 640 B1

## Table XVII

### Room Temperature Yield Strength of Li-modified 2219 Increases with Increasing Li Content

| Alloy | YS (ksi) |
|---|---|
| 2219 | 46.9 |
| 2219 + 1% Li | 67.5 |
| 2219 + 2% Li | 81.0 |
| Al + 2% Li | 24.2 |

1 Ksi = 6.895 MPa

EP 0 377 640 B1

### Table XVIII

**Natural Aging Response of Al-Cu Based Alloys (NA 1200 h)**

| Alloy | Stretch | YS (ksi) | UTS (ksi) | El % | |
|---|---|---|---|---|---|
| 060 | 3%<br>0% | 57.5<br>62.2 | 74.9<br>86.1 | 14.4<br>17.6 | |
| 061 | 3%<br>0% | 59.0<br>64.5 | 77.0<br>85.2 | 17.4<br>14.4 | |
| 066 | 3%<br>0% | 59.0<br>62.9 | 77.1<br>84.2 | 14.6<br>13.4 | |
| 2219 T81 | yes | 42.0 | 58.0 | 6 | Handbook Minimum for Extrusions |
| | | 51.0 | 66.0 | 10 | Typical |

1 Ksi = 6.895 MPa

## Forgeability

A casting of alloy 058 was extruded to 2 inch (5.08 cm) diameter rod at 358°C. Sections of this rod were used as forging stock material to assess the forgability of Al-Cu based alloys. Ten 4-inch (10.16 cm) long sections were cut from the rod, and were forged using a closed die for the arm torque shaft used on a fighter aircraft. The alloy exhibited excellent forgability in this complex forging in that all ten forgings showed complete die filling and no tendency toward cracking over a range of forging temperatures from 275 to 410°C. A forging was subsequently solution heat treated at 504°C for 90 minutes, and water quenched at 20°C. After 24 hours of natural aging, the forgings had a hardness of 77 $R_B$, similar to that of the extruded bar. Furthermore, after aging at 160°C for 20 hours the hardness readings on the forgings ranged from 98 to 104 $R_B$ (ultimate tensile strength in ksi and hardness in $R_B$ roughly correspond one to one). This experiment demonstrates the exceptional potential of this alloy to achieve high strength in forgings without the benefit of cold work to stimulate precipitation during artificial aging. Other Al-Li alloys

24

fail to meet strength goals in complex forgings because many forgings are not amenable to cold working, and these other alloys need cold work to reach high strength.

Quench Sensitivity

Quench sensitivity refers to the inability of a material to attain its maximum strength characteristics from precipitation processes when its cooling rate after solution heat treatment is decreased during quenching, i.e., effected by various liquid media or from heat transfer limitations through the bulk of the quenched piece. It is advantageous to have a material with low quench sensitivity where cooling rates are not critical. Quench "insensitivity" is valuable for weldments where it may not be feasible to re-heat-treat the alloy or where the weld bead and heat affected zones cool relatively slowly after welding.

As a preliminary assessment of quench sensitivity in the Al-Cu based alloy, a hardness profile was measured across a quenched two inch (5.08 cm) diameter rod (four foot (1.219 m) length of extrusion 058). After solution heat treatment at 910°F (488°C) for 1.5 hour, 20°C water quenching, the material was natural aged for 1400 hours, and Rockwell B measurements were taken in increments of 1/8 inch (3.175 mm) from the perifery toward the center of the extrusion as shown in Table XIX. The maximum deviation in hardness is less than 4 $R_B$ indicating low quench sensitivity. Similar hardness profiles across the 2 in. x 3/4 in. (5.08 x 1.91 cm) extrusion 061 showed less than 2 $R_B$ points deviation through the thickness.

As a further evaluation of quench sensitivity, sections of alloy 049 were quenched in either water at room temperature, ice water (0°C), or boiling water (100°C) after solution heat treatment at 504°C. Figure 17 shows the natural aging response of the alloy resulting after quenching from these three different quenching rates. A strong natural aging response is noted for all three quench rates. At the longest recorded aging times, no more than six Rockwell Points separate the slowest (boiling water) and fastest (ice water) quenching rates while there is little difference between standard room temperature water quench and boiling water quench. Thus, Al-Cu-Mg-Ag-Li alloys appear to be sufficiently quench insensitive to have potential for restoring strength in weldments and forgings.

This result also indicates that the exceptional strength of Al-Cu based alloys in the naturally aged condition, e.g. 62.2 ksi (429 MPa) YS and 86.1 ksi (594 MPa) UTS for alloy 061, could be increased further by quenching into ice water. Indeed, the natural aging curves in Figure 17 indicate that tensile strengths greater than 85 ksi (586 MPa) can be obtained after an ice water quench, in about 1000 hours. This is technologically significant because quenching at 0°C is a practical plant operation.

Given the unexpectedly high properties of the alloys of the present invention, it was decided to make additions of silver or silver plus magnesia to recently commercialized aluminum-lithium alloys 2090, 8090, and 8091. The compositions of these alloys are in Table XX. Additions were made of 0.4 weight percent silver to 8090 and 8091, and 0.4 weight percent silver plus 0.4 weight percent magnesium to 2090. These alloys were successfully cast and found to have improved properties.

## TABLE XIX

### Hardness Profiles Across a Two Inch Diameter Rod of Extrusion 058

| Distance From Surface (in.) | Hardness ($R_B$) | | |
|---|---|---|---|
| | Reading 1 | 2 | 3 |
| 1/8 | 78.5 | 79 | 79 |
| 2/8 | 81.0 | 80.5 | 80.5 |
| 3/8 | 81.0 | 81.0 | 81.0 |
| 4/8 | 80.5 | 81.0 | 80.5 |
| 5/8 | 79.5 | 80.5 | 80.5 |
| 6/8 | 79.0 | 79.0 | 79.0 |
| 7/8 | 77.5 | 78.5 | 79.0 |
| 1 | 77.5 | | |

1 inch = 2.54 cm

Table XX

Modified Compositions of Commercial Alloys

| Alloy | Cu | Mg | Li | Ag | Zr | Al |
|---|---|---|---|---|---|---|
| 2090 Modified | 2.7 | 0.4 | 2.2 | 0.4 | 0.14 | Balance |
| 8090 Modified | 1.3 | 0.7 | 2.5 | 0.4 | 0.14 | Balance |
| 8091 Modified | 1.9 | 0.9 | 2.6 | 0.4 | 0.14 | Balance |

This invention thus provides a family of alloy compositions which, when suitably processed, provides exceptional strength -- far greater than existing ingot metallurgy alloys of similar aluminum-based materials. The reasons for this ultra-high strength are not completely understood. Extensive transmission electron microscopy and selected area diffraction experiments failed to detect an omega phase in alloy 049, as might be expected from Polmear's work. It was observed that the $T_1$ phase ($Al_2CuLi$) is exceptionally refined in alloy 049, which may help to explain the ultra-high strength. The alloys have lower density than similar alloys as a result of the addition of lithium. The alloys show surprisingly good ductility (in the naturally aged and underaged conditions), which is unexpected for an alloy containing lithium. Furthermore, the alloys have surprising and unexpectedly high strength in the naturally-aged condition, which makes them extremely promising for weldable and forging applications. The alloys have better combinations of strength and ductility than recently commercialized Al-Li alloys such as 2090, 2091, and 8090 (see Figure 18). Welding trials indicate that the alloys of the present invention are extremely weldable using both conventional and parent metal fillers.

**Claims**

1. An alloy consisting of from 2.0 to 9.8 weight percent of an alloying element selected from magnesium and mixtures of magnesium and copper, magnesium always being present in an amount more than 0.05 weight percent, from 0.01 to 2.0 weight percent silver, from 0.05 to 4.1 weight percent lithium, and less than 1.0 weight percent of a grain refining additive selected from zirconium, chromium, manganese, titanium, boron, hafnium, vanadium, titanium diboride, and mixtures thereof, the balance being aluminum plus incidental impurities.

2. An alloy according to claim 1, wherein the amount of said alloying element is from 2.5 to 8.5 weight percent, the amount of silver is from 0.05 to 1.2 weight percent, the amount of lithium is from 0.2 to 3.1 weight percent, and the amount of said grain refining additive is from 0.05 to 0.6 weight percent.

3. An alloy according to claim 1, wherein the amount of said alloying element is from 3.1 to 7.5 weight percent, the of silver is from 0.1 to 1.0 weight percent, the amount of lithium is from 0.5 to 2.7 weight percent, and the amount of said grain refining additive is from 0.05 to 0.5 weight percent.

4. An alloy according to claim 1, consisting of 6.3 weight percent copper, 0.4 weight percent magnesium, 0.4 weight percent silver, 1.2 weight percent lithium, and 0.15 weight percent zirconium, the balance being aluminum plus incidental impurities.

5. An alloy according to claim 1, consisting of 5.0 weight percent magnesium, 0.4 weight percent silver, 2.0 weight percent lithium, and 0.15 weight percent of said grain refiner, the balance being aluminum plus incidental impurities.

6. An alloy according to claim 1, consisting of 6.3 weight percent copper, 0.4 weight percent magnesium, 0.4 weight percent silver, 1.4 weight percent lithium, and 0.15 weight percent of said grain refiner, the balance being aluminum plus incidental impurities.

7. An alloy according to claim 1, consisting of 0.2 weight percent copper, 5.0 weight percent magnesium, 0.4 weight percent silver, 2.0 weight percent lithium, and 0.15 weight percent of said grain refiner, the balance being aluminum plus incidental impurities.

8. An alloy according to claim 1, consisting of 6.3 weight percent copper, 0.4 weight percent magnesium, 0.4 weight percent silver, 1.7 weight percent lithium, and 0.15 weight percent of said grain refiner, the balance being aluminum plus incidental impurities.

9. An alloy according to claim 1, consisting of 6.3 weight percent copper, 0.4 weight percent magnesium, 0.4 weight percent silver, 2.0 weight percent lithium, and 0.15 weight percent of said grain refiner, the balance being aluminum plus incidental impurities.

10. An alloy according to claim 1, consisting of 5.4 weight percent copper, 0.4 weight percent magnesium, 0.4 weight percent silver, 1.4 weight percent lithium, and 0.15 weight percent of said grain refiner, the balance being aluminum plus incidental impurities.

11. An alloy according to claim 1, consisting of 5.4 weight percent copper, 0.4 weight percent magnesium, 0.4 weight percent silver, 1.7 weight percent lithium, and 0.15 weight percent of said grain refiner, the balance being aluminum plus incidental impurities.

12. An alloy according to claim 1, consisting of 2.0 - 6.8 weight percent copper, more than 0.05 weight percent but not more than 3.0 weight percent magnesium, 0.01 - 2.0 weight percent silver, 0.05 - 4.1 weight percent lithium, and 0.05 - 1.0 weight percent of said grain refiner, the balance being aluminum plus incidental impurities.

13. An alloy according to claim 12, wherein said grain refiner comprises zirconium.

14. An alloy according to claim 1, consisting of 3.0 - 6.5 weight percent copper, more than 0.05 weight percent but not more than 2.0 weight percent magnesium, 0.05 - 1.2 weight percent silver, 0.2 - 3.1

28

weight percent lithium, and 0.05 to 0.6 weight percent of said grain refiner, the balance being aluminum plus incidental impurities.

**15.** An alloy according to claim 14, wherein said grain refiner comprises zirconium.

**16.** An alloy according to claim 1, consisting of 4.0 - 6.5 weight percent copper, 0.1 - 1.0 weight percent magnesium, 0.1 - 1.0 weight percent silver, 0.5 - 2.7 weight percent lithium, and 0.05 - 0.5 weight percent of said grain refiner, the balance being aluminum plus incidental impurities.

**17.** An alloy according to claim 16, wherein said grain refiner comprises zirconium.

**18.** An alloy according to claim 1, consisting of 0 - 1.5 weight percent copper, 2.0 - 9.8 weight percent magnesium, 0.01 - 2.0 weight percent silver, 0.05 - 4.1 weight percent lithium, and 0.05 - 1.0 weight percent of said grain refiner, the balance being aluminum plus incidental impurities.

**19.** An alloy according to claim 1, consisting of 0.01 - 1.0 weight percent copper, 2.5 - 7.0 weight percent magnesium, 0.05 - 1.2 weight percent silver, 0.2 - 3.1 weight percent lithium, and 0.05 - 0.6 weight percent of said grain refiner, the balance being aluminum plus incidental impurities.

**20.** An alloy according to claim 1, consisting of 0.1 - 1.0 weight percent copper, 3.0 - 5.5 weight percent magnesium, 0.1 - 1.0 weight percent silver, 0.5 - 2.7 weight percent lithium, and 0.05 - 0.5 weight percent of said grain refiner, the balance being aluminum plus incidental impurities.

**Patentansprüche**

**1.** Legierung bestehend aus 2,0 bis 9,8 Gew.-% eines Legierungselementes ausgewählt aus Magnesium und Gemischen von Magnesium und Kupfer, wobei Magnesium immer in einer Menge von mehr als 0,05 Gew.-% vorhanden ist, 0,01 bis 2,0 Gew.-% Silber, 0,05 bis 4,1 Gew.-% Lithium und weniger als 1,0 Gew.-% eines Kornfeinungsadditivs ausgewählt aus Zirkonium, Chrom, Mangan, Titan, Bor, Hafnium, Vanadin, Titandiborid und Gemischen hiervon, wobei der Rest aus Aluminium und gelegentlichen Verunreinigungen besteht.

**2.** Legierung nach Anspruch 1, bei der die Menge des Legierungselementes 2,5 bis 8,5 Gew.-% beträgt, die Silbermenge 0,05 bis 1,2 Gew.-% beträgt, die Lithiummenge 0,2 bis 3,1 Gew.-% beträgt und die Menge des Kornfeinungsadditivs 0,05 bis 0,6 Gew.-% beträgt.

**3.** Legierung nach Anspruch 1, bei der die Menge des Legierungselementes 3,1 bis 7,5 Gew.-% beträgt, die Silbermenge 0,1 bis 1,0 Gew.-% beträgt, die Lithiummenge 0,5 bis 2,7 Gew.-% beträgt und die Menge des Kornfeinungsadditivs 0,05 bis 0,5 Gew.-% beträgt.

**4.** Legierung nach Anspruch 1 bestehend aus 6,3 Gew.-% Kupfer, 0,4 Gew.-% Magnesium, 0,4 Gew.-% Silber, 1,2 Gew.-% Lithium und 0,15 Gew.-% Zirkonium, wobei der Rest aus Aluminium und gelegentlichen Verunreinigungen besteht.

**5.** Legierung nach Anspruch 1 bestehend aus 5,0 Gew.-% Magnesium, 0,4 Gew.-% Silber, 2,0 Gew.-% Lithium und 0,15 Gew.-% des Kornfeinungsmittels, wobei der Rest aus Aluminium und gelegentlichen Verunreinigungen besteht.

**6.** Legierung nach Anspruch 1 bestehend aus 6,3 Gew.-% Kupfer, 0,4 Gew.-% Magnesium, 0,4 Gew.-% Silber, 1,4 Gew.-% Lithium und 0,15 Gew.-% des Kornfeinungsmittels, wobei der Rest aus Aluminium und gelegentlichen Verunreinigungen besteht.

**7.** Legierung nach Anspruch 1 bestehend aus 0,2 Gew.-% Kupfer, 5,0 Gew.-% Magnesium, 0,4 Gew.-% Silber, 2,0 Gew.-% Lithium und 0,15 Gew.-% des Kornfeinungsmittels, wobei der Rest aus Aluminium und gelegentlichen Verunreinigungen besteht.

**8.** Lagerung nach Anspruch 1 bestehend aus 6,3 Gew.-% Kupfer, 0,4 Gew.-% Magnesium, 0,4 Gew.-% Silber, 1,7 Gew.-% Lithium und 0,15 Gew.-% des Kornfeinungsmittels, wobei der Rest aus Aluminium und gelegentlichen Verunreinigungen besteht.

**9.** Legierung nach Anspruch 1 bestehend aus 6,3 Gew.-% Kupfer, 0,4 Gew.-% Magnesium, 0,4 Gew.-% Silber, 2,0 Gew.-% Lithium und 0,15 Gew.-% des Kornfeinungsmittels, wobei der Rest aus Aluminium und gelegentlichen Verunreinigungen besteht.

**10.** Legierung nach Anspruch 1 bestehend aus 5,4 Gew.-% Kupfer, 0,4 Gew.-% Magnesium, 0,4 Gew.-% Silber, 1,4 Gew.-% Lithium und 0,15 Gew.-% des Kornfeinungsmittels, wobei der Rest aus Aluminium und gelegentlichen Verunreinigungen besteht.

**11.** Legierung nach Anspruch 1 bestehend aus 5,4 Gew.-% Kupfer, 0,4 Gew.-% Magnesium, 0,4 Gew.-% Silber, 1,7 Gew.-% Lithium und 0,15 Gew.-% des Kornfeinungsmittels, wobei der Rest aus Aluminium und gelegentlichen Verunreinigungen besteht.

**12.** Legierung nach Anspruch 1 bestehend aus 2,0 bis 6,8 Gew.-% Kupfer, mehr als 0,05 Gew.-%, aber nicht mehr als 3,0 Gew.-% Magnesium, 0,01 bis 2,0 Gew.-% Silber, 0,05 bis 4,1 Gew.-% Lithium und 0,05 bis 1,0 Gew.-% des Kornfeinungsmittels, wobei der Rest aus Aluminium und gelegentlichen Verunreinigungen besteht.

**13.** Legierung nach Anspruch 12, worin das Kornfeinungsmittel Zirkonium umfaßt.

**14.** Legierung nach Anspruch 1 bestehend aus 3,0 bis 6,5 Gew.-% Kupfer, mehr als 0,05 Gew.-%, aber nicht mehr als 2,0 Gew.-% Magnesium, 0,05 bis 1,2 Gew.-% Silber, 0,2 bis 3,1 Gew.-% Lithium und 0,05 bis 0,6 Gew.-% des Kornfeinungsmittels, wobei der Rest aus Aluminum und gelegentlichen Verunreinigungen besteht.

**15.** Legierung nach Anspruch 14, worin das Kornfeinungsmittel Zirkonium umfaßt.

**16.** Legierung nach Anspruch 1 bestehend aus 4,0 bis 6,5 Gew.-% Kupfer, 0,1 bis 1,0 Gew.-% Magnesium, 0,1 bis 1,0 Gew.-% Silber, 0,5 bis 2,7 Gew.-% Lithium und 0,05 bis 0,5 Gew.-% des Kornfeinungsmittels, wobei der Rest aus Aluminium und gelegentlichen Verunreinigungen besteht.

**17.** Legierung nach Anspruch 16, worin das Kornfeinungsmittel Zirkonium umfaßt.

**18.** Legierung nach Anspruch 1 bestehend aus 0 bis 1,5 Gew.-% Kupfer, 2,0 bis 9,8 Gew.-% Magnesium, 0,01 bis 2,0 Gew.-% Silber, 0,05 bis 4,1 Gew.-% Lithium und 0,05 bis 1,0 Gew.-% des Kornfelnungsmittels, wobei der Rest aus Aluminium und gelegentlichen Verunreinigungen besteht.

**19.** Legierung nach Anspruch 1 bestehend aus 0,01 bis 1,0 Gew.-% Kupfer, 2,5 bis 7,0 Gew.-% Magnesium, 0,05 bis 1,2 Gew.-% Silber, 0,2 bis 3,1 Gew.-% Lithium und 0,05 bis 0,6 Gew.-% des Kornfeinungsmittels, wobei der Rest aus Aluminium und gelegentlichen Verunreinigungen besteht.

**20.** Legierung nach Anspruch 1 bestehend aus 0,1 bis 1,0 Gew.-% Kupfer, 3,0 bis 5,5 Gew.-% Magnesium, 0,1 bis 1,0 Gew.-% Silber, 0,5 bis 2,7 Gew.-% Lithium und 0,05 bis 0,5 Gew.-% des Kornfeinungsmittels, wobei der Rest aus Aluminium und gelegentlichen Verunreinigungen besteht.

**Revendications**

**1.** Alliage constitué de 2,0 à 9,8 % en poids d'un élément d'alliage choisi parmi l'ensemble comprenant le magnésium et des mélanges de magnésium et de cuivre, le magnésium étant toujours présent en une quantité supérieure à 0,05 % en poids, de 0,01 à 2,0 % en poids d'argent, de 0,05 à 4,1 % en poids de lithium et moins de 1,0 % en poids d'un agent d'affinage structural choisi parmi le Zirconium, le chrome, le manganèse, le titane, le bore, l'hafnium, le vanadium, le diborure de titane et leurs mélanges, le reste étant constitué d'aluminium et d'impuretés éventuelles.

**2.** Alliage selon la revendication 1, dans lequel la quantité dudit élément d'alliage est de 2,5 à 8,5 % en poids, la quantité d'argent est de 0,05 à 1,2 % en poids, la quantité de lithium est de 0,2 à 3,1 % en poids et la quantité de l'agent d'affinage structural est de 0,05 à 0,6 % en poids.

**3.** Alliage selon la revendication 1, dans lequel la quantité dudit élément d'alliage est de 3,1 à 7,5 % en poids, la quantité de l'argent est de 0,1 à 1,0 % en poids, la quantité de lithium est de 0,5 à 2,7 % en poids et la quantité de l'agent d'affinage structural est de 0,05 à 0,5 % en poids.

**4.** Alliage selon la revendication 1, constitué de 6,3 % en poids de cuivre, de 0,4 % en poids de magnésium, de 0,4 % en poids d'argent, de 1,2 % en poids de lithium et de 0,15 % en poids de zirconium, le reste étant constitué d'aliminium et d'impuretés éventuelles.

**5.** Alliage selon la revendication 1, constitué de 5,0 % en poids de magnésium, de 0,4 % en poids d'argent, de 2,0 % en poids de lithium et de 0,15 % en poids de l'agent d'affinage structural, le reste étant constitué d'aluminium et d'éventuelles impuretés.

**6.** Alliage selon la revendication 1, constitué de 6,3 % en poids de cuivre, de 0,4 % en poids de magnésium, de 0,4 % en poids d'argent, de 1,4 % en poids de lithium et de 0,15 % en poids de l'agent d'affinage structural, le reste étant constitué d'aluminium et d'éventuelles impuretés.

**7.** Alliage selon la revendication 1, constitué de 6,3 % en poids de cuivre, de 5,0 % en poids de magnésium, de 0,4 % en poids d'argent, de 2,0 % en poids de lithium et de 0,15 % en poids de l'agent d'affinage structural, le reste étant constitué d'aluminium et d'éventuelles impuretés.

**8.** Alliage selon la revendication 1, constitué de 6,3 % en poids de cuivre, de 0,4 % en poids de magnésium, de 0,4 % en poids d'argent, de 1,7 % en poids de lithium et de 0,15 % en poids de l'agent d'affinage structural, le reste étant constitué d'aluminium et d'éventuelles impuretés.

**9.** Alliage selon la revendication 1, constitué de 6,3 % en poids de cuivre, de 0,4 % en poids de magnésium, de 0,4 % en poids d'argent, de 2,0 % en poids de lithium et de 0,15 % en poids de l'agent d'affinage structural, le reste étant constitué d'aluminium et d'éventuelles impuretés.

**10.** Alliage selon la revendication 1, constitué de 5,4 % en poids de cuivre, de 0,4 % en poids de magnésium, de 0,4 % en poids d'argent, de 1,4 % en poids de lithium et de 0,15 % en poids de l'agent d'affinage structural, le reste étant constitué d'aluminium et d'éventuelles impuretés.

**11.** Alliage selon la revendication 1, constitué de 5,4 % en poids de cuivre, de 0,4 % en poids de magnésium, de 0,4 % en poids d'argent, de 1,7 % en poids de lithium et de 0,15 % en poids de l'agent d'affinage structural, le reste étant constitué d'aluminium et d'éventuelles impuretés.

**12.** Alliage selon la revendication 1, constitué de 2,0 à 6,8 % en poids de cuivre, de plus de 0,05 % en poids mais au plus de 3,0 % en poids de magnésium, de 0,01 à 2,0 % en poids d'argent, de 0,05 à 4,1 % en poids de lithium et de 0,05 à 1,0 % en poids de l'agent d'affinage structural, le reste étant constitué d'aluminium et d'éventuelles impuretés.

**13.** Alliage selon la revendication 12, dans lequel ledit agent d'affinage structural comprend du Zirconium.

**14.** Alliage selon la revendication 1, constitué de 3,0 à 6,5 % en poids de cuivre, de plus de 0,05 % en poids mais au plus de 2,0 % en poids de magnésium, de 0,05 à 1,2 % en poids d'argent, de 0,2 à 3,1 % en poids de lithium et de 0,05 à 0,6 % en poids de l'agent d'affinage structural, le reste étant constitué d'aluminium et d'éventuelles impuretés.

**15.** Alliage selon la revendication 14, dans lequel ledit agent d'affinage structural comprend du zirconium.

**16.** Alliage selon la revendication 1, constitué de 4,0 à 6,5 % en poids de cuivre, de 0,1 à 1,0 % en poids de magnésium, de 0,1 à 1,0 % en poids d'argent, de 0,5 à 2,7 % en poids de lithium et de 0,05 à 0,5 % en poids de l'agent d'affinage structural, le reste étant constitué d'aluminium et d'éventuelles impuretés.

**17.** Alliage selon la revendication 16, dans lequel ledit agent d'affinage structural comprend du zirconium.

**18.** Alliage selon la revendication 1, constitué de 0 à 1,5 % en poids de cuivre, de 2,0 à 9,8 % en poids de magnésium, de 0,01 à 2,0 % en poids d'argent, de 0,5 à 4,1 % en poids de lithium et de 0,05 à 1,0 % en poids de l'agent d'affinage structural, le reste étant constitué d'aluminium et d'éventuelles impuretés.

**19.** Alliage selon la revendication 1, constitué de 0,01 à 1,0 % en poids de cuivre, de 2,5 à 7,0 % en poids de magnésium, de 0,05 à 1,2 % en poids d'argent, de 0,2 à 3,1 % en poids de lithium et de 0,05 à 0,6 % en poids de l'agent d'affinage structural, le reste étant constitué d'aluminium et d'éventuelles impuretés.

**20.** Alliage selon la revendication 1, constitué de 0,1 à 1,0 % en poids de cuivre, de 3,0 à 5,5 % en poids de magnésium, de 0,1 à 1,0 % en poids d'argent, de 0,5 à 2,7 % en poids de lithium et de 0,05 à 0,5 % en poids de l'agent d'affinage structural, le reste étant constitué d'aluminium et d'éventuelles impuretés.

ISOCHRONAL AGING CURVES FOR Al-Cu-Mg-Ag-Li ALLOY 049

FIG. 1

ISOCHRONAL AGING CURVES FOR Al-Cu-Mg-Ag-Li ALLOY 051

FIG. 2

ISOCHRONAL AGING CURVES FOR AL-MG-AG-LI ALLOY 050

FIG. 3

EP 0 377 640 B1

ISOTHERMAL AGING AT 160°C FOR ALLOY 049

FIG. 4

ISOTHERMAL AGING AT 160°C FOR ALLOY 050

FIG. 5

EP 0 377 640 B1

NATURAL AGING RESPONSE OF ALLOY 049 EXTRUSION WITH AND WITHOUT 3% STRETCH

FIG. 6

EP 0 377 640 B1

NATURAL AGING RESPONSE OF ALLOY 051 EXTRUSION WITH AND WITHOUT 3% STRETCH

FIG. 7

NATURAL AGING RESPONSE OF ALLOY 050 EXTRUSION WITH AND WITHOUT 3% STRETCH

FIG. 8

EP 0 377 640 B1

ELONGATION (%)

STRENGTH (ksi)

AGING TIME AT 160°C

(L ORIENTATION)
● ULTIMATE TENSILE STRENGTH
○ YIELD STRENGTH
△ % ELONGATION

% EL

$\sigma_{UTS}$

$\sigma_{YS}$

Naturally aged (1000h)

ROOM TEMPERATURE TENSILE PROPERTIES OF ALLOY 049 FOR VARIOUS AGING TIMES AT 160°C

FIG. 9

41

COMPRESSIVE YIELD STRENGTH OF ALLOY 051 FOR VARIOUS DEFORMATION TEMPERATURES

FIG. 10

EP 0 377 640 B1

TENSILE YIELD STRENGTH VS. TEMPERATURE FOR ALLOY 049

FIG. 11

ULTIMATE TENSILE STRENGTH VS. TEMPERATURE FOR ALLOY 049

FIG. 12

EP 0 377 640 B1

Ultimate Tensile Strength vs. Weight Percent Lithium
of Al-Cu Based Alloys in the SUA Temper

FIG. 13

YIELD STRENGTH VS. WEIGHT PERCENT LITHIUM OF AL-CU
BASED ALLOYS IN THE SUA TEMPER

## FIG. 14

NATURAL AGED STRENGTH OF THREE PERCENT STRETCHED
AL-CU BASED ALLOYS AS A FUNCTION OF LITHIUM CONTENT

## FIG. 15

UNSTRECHED NATURALLY AGED 1200h

Al–6.3Cu–0.4Mg–0.4Ag+wt%Ll
○ UTS
▽ YS

Al–5.4Cu–0.4Mg–0.4Ag+wt%Ll
● UTS
▼ YS

STRENGTH (ksi)

wt %Ll

Natural Aged Strength of Unstretched Al–Cu
Based Alloys as a Function of Lithium Content

# FIG. 16

Natural Aging Response of Unstretched 049 Alloy After Quenching From 504°C Into Various Media

# FIG. 17

STRENGTH VS. ELONGATION FOR ALLOY 049

## FIG. 18